# FASCICULE DE BREVET EUROPEEN

(11) **EP 2 097 162 B1**
(45) Date de publication et mention de la délivrance du brevet: **23.02.2011**
(21) Numéro de dépôt: 07872028.1
(22) Date de dépôt: 24.12.2007
(51) Int. Cl.: B01F 17/32, C10L 1/14, C10L 1/232

(54) **MOLECULES STABILISANTES D'ASPHALTENE PRESENTANT UN MOTIF TETRAPYRROLIQUE**
ASPHALTEN-STABILISIERENDE MOLEKÜLE MIT TETRAPYRROL-STRUKTUR
ASPHALTENE-STABILISING MOLECULES HAVING A TETRAPYRROLIC PATTERN

(30) Priorité: 27.12.2006 FR 0655986
(43) Date de publication de la demande: 09.09.2009
(73) Titulaire: Scomi Anticor, 04310 Peyruis (FR)
(72) Inventeur: ROUET, Jean, F-37000 Tours (FR); GROFFE, Didier, F-04100 Manosque (FR); SALAUN, Mathieu, F-04100 Manosque (FR)
(74) Mandataire: Denjean, Eric
(86) Numéro de dépôt international: PCT/FR2007/052619
(87) Numéro de publication internationale: WO 2008/084178

(56) Documents cités:
- EP-A- 1 666 570
- FR-A1- 2 679 151
- GB-A- 2 071 141
- US-A- 5 826 369
- US-A1- 2003 093 943
- L. FERNANDO ET AL: "Stabilization of Asphaltenes by Phenolic compounds Extracted from Cashew-Nut Shell Liquid" JOURNAL OF APPLIED POLYMER SCIENCE, vol. 73, 1999, pages 29-34, XP009057289 Extrait de l'Internet: URL:www.sciencedirect.com> [extrait le 2007-08-10]

## Description

L'invention a pour objet de nouveaux dispersants d'asphaltène qui précipitent dans les pétroles bruts ou les produits dérivés de pétrole brut tels que notamment, les fuels lourds et les bitumes. Elle concerne également un procédé de stabilisation des asphaltènes présents dans le pétrole brut et des produits dérivés ci-dessus énoncés.

Les asphaltènes constituent une famille de composés solubles dans les solvants aromatiques et insolubles dans les hydrocarbures aliphatiques (N-pentane, N-heptane...). Leur structure et leur composition varient d'un pétrole brut à un autre, mais certains atomes et groupements de ladite structure sont toujours présents dans des proportions variables. Parmi ces atomes, on peut citer l'oxygène, le soufre l'azote, les métaux lourds tels que le nickel et le vanadium. La présence de nombreux groupements polycycliques donnent aux molécules d'asphaltènes un caractère hautement aromatique. Du fait de leur insolubilité dans les hydrocarbures aliphatiques et en fonction de la nature plus ou moins aromatique du pétrole brut ou des coupes pétrolières (également désignés produits dérivés), les asphaltènes peuvent précipiter. Ce phénomène engendre la formation de dépôt dans les canalisations, les équipements de production, ainsi que sur la roche réservoir, ce qui perturbe l'exploitation des gisements et peut entraîner, dans certains cas, l'arrêt de l'installation.

Le problème de l'instabilité des asphaltènes est connu depuis de nombreuses années. Plusieurs solutions ont été proposées. On connaît ainsi les solutions "mécaniques" telles que désasphalténage, lavage par solvants, raclage mécanique, mais également des solutions "chimiques" mettant en ouvre des agents stabilisants sous forme de polymères ou de tensio actifs.

Le document FR-A-2 679 151 décrit ainsi un mélange d'acide alkyl aryl sulfonique et d'un tensioactif cationique de type imidazoline. De même, le document US-A-6 180 683 divulgue des résines formaldéhyde / alkyl phénol utilisées en synergie avec des amines éthoxylées. EP-A-1 666 570 décrit une méthode pour la dispersion d'asphaltène dans le pétrole brut par addition d'agents chélants.

GB 2 071 141 divulgue la stabilisation de dispersions de combustibles solides dans le pétrole par des métalloporphyrines*.* Même si ces produits ont des capacités stabilisantes satisfaisantes, ils n'offrent pas toujours le profil écotoxique et toxicologique recherché. Or, l'industrie pétrolière dans son ensemble connaît aujourd'hui des problèmes liés à la manipulation de ce type de produits, ainsi que les effets néfastes observés sur l'environnement. Ceci est particulièrement vrai dans le cas d'exploitation de gisements pétroliers en mer (plateforme offshore, notamment en mer du Nord, Golfe du Mexique, Côte de l'Afrique Occidentale). Parallèlement, les produits disponibles sur le marché sont rarement compatibles avec les recommandations OSPAR visant à limiter l'impact des produits de traitement sur l'environnement. En particulier, ils ne sont pas biodégradables.

Le problème posé est donc de proposer une alternative aux stabilisants d'asphaltènes chimiques de synthèse en développant des produits qui soient compatibles avec les recommandations OSPAR et qui soient notamment biodégradables.

Dans le cadre de sa recherche, le Demandeur a constaté que les molécules comprenant un noyau tétrapyrrolique, telle que par exemple la chlorophylle, étaient particulièrement efficaces pour stabiliser les asphaltènes présents dans les pétroles bruts et les coupes pétrolières.

Le document US-A-5 826 369 décrit un catalyseur de combustion destiné à être utilisé en tant qu'additif, dans une chaudière. En pratique, le catalyseur injecté au niveau du brûleur se présente sous la forme d'un mélange associant β-carotène, chlorophylle et huile de jojoba. Il n'est pas fait référence aux propriétés stabilisantes de la chlorophylle vis-à-vis des asphaltènes.

L'invention a donc pour objet l'utilisation d'une molécule ou un mélange de molécules biodégradables présentant des motifs tétrapyrroliques, comme stabilisant des asphaltènes présents dans le pétrole brut et les dérivés du pétrole brut.

Dans la suite de la description, par l'expression « molécule présentant des motifs tétrapyrroliques », on désigne toute molécule comprenant au moins un motif tétrapyrrolique dans sa structure, le motif tétrapyrrolique pouvant être ou non substitué, la molécule étant biodégradable.

Parmi les molécules utilisables, on peut citer notamment mais de façon non limitative, la chlorophylle, les porphyrines et les chlorines.

Dans un mode de réalisation avantageux, la molécule biodégradable utilisée comme stabilisant est la chlorophylle.

La chlorophylle peut être obtenue par synthèse chimique ou utilisée sous la forme d'un extrait végétal. Toute plante riche en chlorophylle peut être utilisée en tant que source de chlorophylle. Il peut s'agir par exemple d'un extrait de luzerne, de graminées, d'algues etc... Ces extraits sont obtenus à partir des parties de plantes riches en chlorophylle. Les extraits utilisés sont avantageusement des extraits alcooliques, en particulier avec de l'éthanol.

Il existe plusieurs chlorophylles se différentiant les unes des autres par la nature des substituants présents sur le noyau, les chlorophylles étant capables de complexer des métaux. Habituellement le magnésium est le métal séquestré ; il est aisément remplacé par d'autres métaux dont le cuivre. La forme magnésienne est instable à des températures supérieures à 50°C. La chlorophylle utilisée dans ce cas est la chlorophylle cuprique du fait de sa stabilité. La substitution des ions peut être effectuée directement sur l'extrait végétal.

L'invention a également pour objet un procédé de stabilisation d'asphaltènes dans du pétrole brut ou des dérivés de pétrole brut, consistant à injecter dans le pétrole une molécule ou un mélange de molécules biodégradables présentant des motifs tétrapyrroliques.

En pratique, les molécules de l'invention sont injectées à raison de 1 à 500 ppm et avantageusement de 1 à 50 ppm par rapport au pétrole.

Lorsque la molécule comprenant des motifs tétrapyrroliques est de la chlorophylle sous la forme d'un extrait végétal, celui-ci est préalablement dilué avant utilisation à une concentration massique comprise entre 2 et 10%. Bien entendu, l'homme du métier choisira de manière adéquate le diluant utilisable, celui-ci étant choisi notamment parmi les alcools, les cétones, les solvants aromatiques et idéalement un mélange d'esters d'huiles végétales ou les huiles végétales elles mêmes.

L'invention et les avantages qui en découlent ressortiront mieux de l'exemple de réalisation suivant.

### Préparation du stabilisant de l'invention

Un extrait de feuille de luzerne repris dans un mélange d'hexane / acétone est mélangé avec du nitrate de cuivre. L'extrait de chlorophylle cuprique concentré alors obtenu par échange d'ions est dilué dans un ester méthylique d'acide oléique à une concentration massique égale à 10%.

L'évaluation de l'efficacité de l'additif comme agent stabilisant et dispersant d'asphaltène est réalisé suivant le protocole décrit ci-après.

Les constituants asphalténiques du milieu hydrocarboné, pétrole brut ou coupe pétrolière, sont séparés du milieu par précipitation sélective au N-heptane.

Les constituants ainsi séparés sont mis en solution dans du toluène (solubilisant d'asphaltène) à raison de 20g/l. L'additif est préparé à 0,05% de matière active dans du toluène.

Dans des tubes à essai de 20 ml, 200 µl de solution d'asphaltène sont mélangés à des volumes d'additifs compris entre 20 et 400 µl.

Les tubes sont agités. Un solvant aliphatique (N-heptane) est ajouté rapidement dans chaque tube. Les tubes sont fermés, puis retournés cinq fois. L'efficacité de l'additif est déterminée par observation de la précipitation et de la sédimentation des asphaltènes dans le temps, après 24h. L'obtention d'une solution limpide et foncée exempte de solides précipités caractérise une stabilisation d'asphaltènes dans le solvant aliphatique précipitant satisfaisante, tandis qu'une solution limpide et claire présentant un dépôt foncé est signe d'une absence de stabilisation.

Les essais ont été conduits sur des asphaltènes extraits de différents pétroles bruts.

Le tableau ci-après montre le volume de solution de chlorophylle cuprique à partir duquel sont stabilisés ces différents asphaltènes en comparaison avec un additif usuel commercialisé sous la dénomination ANTICOR DSA 801.

| **Asphaltènes extraits des pétroles** | **Chlorophylle cuprique à 0.05% dans du toluène** | **0.05% d'un additif commercial dans le toluène** |
|---|---|---|
| Pétrole I (Mexique) | 280µl | 180 µl |
| Pétrole II (Venezuela) | 280 µl | 200 µl |
| Pétrole III (France) | 240 µl | 200 µl |
| Pétrole IV (Mexique) | 360 µl | 280 µl |

Comme il ressort de ce tableau, la quantité de chlorophylle cuprique permettant de stabiliser les différents asphaltènes est très faible et comparable aux dosages utilisés avec le produit ANTICOR DSA 801.

L'invention et les avantages qui en découlent ressortent bien de la description qui précède. On note notamment l'utilisation d'un stabilisant biodégradable susceptible d'être obtenu de manière particulièrement simple et ayant des effets sur des d'asphaltènes d'origine et de composition différentes.

## Revendications

1. Utilisation d'une molécule ou d'un mélange de molécules biodégradables présentant des motifs tétrapyrroliques, comme stabilisant des asphaltènes présents dans le pétrole brut et des dérivés de pétrole brut.

2. Utilisation selon la revendication 1, **caractérisée en ce que** la molécule biodégradable est la chlorophylle.

3. Utilisation selon la revendication 2, **caractérisée en ce que** la chlorophylle se trouve sous la forme d'un extrait végétal.

4. Utilisation selon la revendication 3, **caractérisée en ce que** l'extrait végétal provient de la luzerne.

5. Utilisation selon la revendication 2, **caractérisée en ce que** la chlorophylle est de la chlorophylle cuprique.

6. Procédé de stabilisation d'asphaltènes dans du pétrole brut ou des dérivés de pétrole brut consistant à injecter dans le pétrole une molécule ou un mélange de molécules biodégradables présentant des motifs tétrapyrroliques.

7. Procédé selon la revendication 6, **caractérisé en ce que** les molécules sont injectées à raison de 1 à 500 ppm par rapport au pétrole.

8. Procédé selon l'une des revendications 7 ou 8, **caractérisé en ce que** la molécule est de la chlorophylle sous la forme d'un extrait végétal utilisé à une concentration massique comprise entre 2 et 10%.

## Claims

1. Use of a biodegradable molecule or a mixture of biodegradable molecules having tetrapyrrolic rings, as stabilizers for the asphaltenes present in crude oil and crude oil derivatives.

2. Use according to Claim 1, **characterized in that** the biodegradable molecule is chlorophyll.

3. Use according to Claim 2, **characterized in that** the chlorophyll is in the form of a plant extract.

4. Use according to Claim 3, **characterized in that** the plant extract is derived from alfalfa.

5. Use according to Claim 2, **characterized in that** the chlorophyll is cupric chlorophyll.

6. Method for stabilising asphaltenes in crude oil or crude oil derivatives, consisting in injecting into the oil a biodegradable molecule or a mixture of biodegradable molecules having tetrapyrrolic rings.

7. Method according to Claim 6, **characterized in that** the molecules are injected at the rate of 1 to 500 ppm of the oil.

8. Method according to either of Claims 7 and 8, **characterized in that** the molecule is chlorophyll in the form of a plant extract used in a mass concentration of between 2 and 10%.

## Patentansprüche

1. Verwendung eines biologisch abbaubaren Moleküls oder einer Mischung von biologisch abbaubaren Molekülen mit Tetrapyrroleinheiten als Stabilisierungsmittel für die in Erdöl und Erdölderivaten vorhandenen Asphaltene.

2. Verwendung nach Anspruch 1, **dadurch gekennzeichnet, dass** das biologisch abbaubare Molekül Chlorophyll ist.

3. Verwendung nach Anspruch 2, **dadurch gekennzeichnet, dass** das Chlorophyll sich in der Form eines Pflanzenextrakts befindet.

4. Verwendung nach Anspruch 3, **dadurch gekennzeichnet, dass** der Pflanzenextrakt von der Luzerne stammt.

5. Verwendung nach Anspruch 2, **dadurch gekennzeichnet, dass** das Chlorophyll Kupferchlorophyll ist.

6. Verfahren zur Stabilisierung von Asphaltenen in Erdöl oder Erdölderivaten, das darin besteht, dass in das Erdöl ein biologisch abbaubares Molekül oder eine Mischung von biologisch abbaubaren Molekülen mit Tetrapyrroleinheiten eingespritzt wird.

7. Verfahren nach Anspruch 6, **dadurch gekennzeichnet, dass** die Moleküle in einer Menge von 1 bis 500 ppm, bezogen auf das Erdöl, eingespritzt werden.

8. Verfahren nach einem der Ansprüche 7 oder 8, **dadurch gekennzeichnet, dass** das Molekül Chlorophyll in der Form eines Pflanzenextrakts ist, der in einer Massenkonzentration zwischen 2 und 10% verwendet wird.
